# EUROPÄISCHE PATENTANMELDUNG

(11) **EP 3 848 162 A1**
(43) Veröffentlichungstag der Anmeldung: **14.07.2021**
(21) Anmeldenummer: 20151150.8
(22) Anmeldetag: 10.01.2020
(51) Int. Cl.: B25F 5/02, B23Q 11/00

(54) **WERKZEUGGERÄT-SYSTEM UND VERFAHREN ZUR VERBINDUNG EINER STAUBSAUGVORRICHTUNG MIT EINEM WERKZEUGGERÄT**

(71) Anmelder: Hilti Aktiengesellschaft, 9494 Schaan (LI)
(72) Erfinder: Vida, Gabor, 7000 Chur (CH); Taack-Trakranen, John Van, 81475 München (DE)
(74) Vertreter: Hilti Aktiengesellschaft Corporate Intellectual Property

(57) **Zusammenfassung**

Die vorliegende Erfindung betrifft ein Werkzeuggerät-System und ein Verfahren zur Verbindung einer Staubsaugvorrichtung mit einem Werkzeuggerät. Das System umfasst ein Werkzeuggerät mit einem Werkzeug, eine Staubsaugvorrichtung zum Absaugen von Staub, der bei einer Arbeit mit dem Werkzeuggerät entsteht, und eine Sauganschlussvorrichtung, wobei die Sauganschlussvorrichtung zwischen dem Werkzeug des Werkzeuggeräts und dem Werkzeuggerät angeordnet vorliegt und mit dem Werkzeuggerät dadurch verbindbar ist, dass eine Verzahnung des Werkzeuggeräts mit einer Gegenverzahnung an der Sauganschlussvorrichtung in Eingriff bringbar ist. Die vorliegende Erfindung ermöglicht es vorteilhafterweise, dass ein Saugschlauch, der die Staubsaugvorrichtung und die Sauganschlussvorrichtung des Werkzeuggerät-Systems miteinander verbindet, relativ zu einem Griff des Werkzeuggeräts fixiert werden kann. Darüber hinaus kann ein Winkel zwischen Saugschlauch und Griff des Werkzeuggeräts besonders einfach eingestellt werden.

## Beschreibung

Die vorliegende Erfindung betrifft ein Werkzeuggerät-System und ein Verfahren zur Verbindung einer Staubsaugvorrichtung mit einem Werkzeuggerät. Das System umfasst ein Werkzeuggerät mit einem Werkzeug, eine Staubsaugvorrichtung zum Absaugen von Staub, der bei einer Arbeit mit dem Werkzeuggerät entsteht, und eine Sauganschlussvorrichtung, wobei die Sauganschlussvorrichtung zwischen dem Werkzeug des Werkzeuggeräts und dem Werkzeuggerät angeordnet vorliegt und mit dem Werkzeuggerät dadurch verbindbar ist, dass eine Verzahnung des Werkzeuggeräts mit einer Gegenverzahnung an der Sauganschlussvorrichtung in Eingriff bringbar ist. Die vorliegende Erfindung ermöglicht es, dass ein Saugschlauch, der die Staubsaugvorrichtung und die Sauganschlussvorrichtung miteinander verbindet, relativ zu einem Griff des Werkzeuggeräts fixiert werden kann. Darüber hinaus kann ein Winkel zwischen Saugschlauch und Griff des Werkzeuggeräts besonders einfach eingestellt werden.

### Hintergrund der Erfindung:

Im Stand der Technik sind Werkzeuggeräte, wie Kernbohrgeräte, bekannt, mit denen Bohrkerne aus einem Untergrund herausgetrennt werden können. Es ist ferner bekannt, dass der Staub, der bei der Arbeit mit einem Werkzeuggerät entsteht, mit Hilfe einer Staubsaugvorrichtung aus dem Arbeitsbereich eines Werkzeuggeräts abgesaugt werden kann, um zu verhindern, dass der Staub in die Atemwege eines Nutzers des Werkzeuggeräts gelangt.

Insbesondere sind im Stand der Technik zwei Konzepte bekannt, mit denen bei Kernbohrgeräten eine Absaugung des anfallenden Staubs erreicht werden soll. Gemäß einem ersten Konzept wird der Staub durch die Welle des Kernbohrgeräts abgesaugt. Dieses Konzept ist mit dem Nachteil verbunden, dass keine fest mit dem Kernbohrgerät montierbare Anbohrhilfe verwendet werden kann, wenn die Absaugung durch die Welle des Kernbohrgeräts erfolgt. Eine alternativ verwendbare, nicht fest montierbare Anbohrhilfe kann beispielsweise an einer vorderen Spitze der Bohrkrone oder des Dosensenkers verwendet werden. Allerdings wird eine solche alternative Anbohrhilfe an der Vorderspitze der Bohrkrone oder des Dosensenkers lediglich eingesteckt und muss nach dem Anbohren entfernt werden, wenn der Bohrvorgang fortgesetzt werden soll. Ein solches Vorgehen ist allerdings sehr zeit- und personalaufwändig und reduziert die Arbeitseffizienz beim Erzeugen der Bohrkerne.

Gemäß einem zweiten Konzept wird vorgeschlagen, den bei der Arbeit mit dem Werkzeuggerät anfallenden Staub durch eine Rückwand des Werkzeugs des Werkzeuggeräts, d.h. der Bohrkrone oder des Dosensenkers, abzusaugen. Allerdings ist dieses zweite Konzept mit dem Nachteil verbunden, dass bei den verfügbaren Lösungen zwischen Werkzeuggerät und Absaugung ein Zwischenraum entsteht. Als Konsequenz kann es vorkommen, dass der Saugschlauch, der Werkzeug und Staubsaugvorrichtung miteinander verbindet, beliebig bzw. der Schwerkraft folgend herabhängt, was bei diversen Anwendungen sehr unangenehm sein und für den Nutzer des Werkzeuggeräts eine unerwünschte Belastung darstellen kann.

Aufgabe der vorliegenden Erfindung ist es somit, die vorstehend beschriebenen Nachteile konventioneller Kernbohrsysteme zu überwinden und ein unerwünschtes Herunterhängen des Saugschlauches zu verhindern. Die Fachwelt würde es ferner begrüßen, wenn ein System und ein Verfahren zur Verbindung einer Staubsaugvorrichtung mit einem Werkzeuggerät bereitgestellt werden könnte, bei dem der Saugschlauch, der die Staubsaugvorrichtung und das Werkzeuggerät miteinander verbindet, relativ zu einem Seitenhandgriff des Werkzeuggeräts fixiert werden könnte. Eine weitere Aufgabe, die der vorliegenden Erfindung zugrunde liegt, besteht darin, eine Möglichkeit bereitzustellen, einen Winkel zwischen Saugschlauch und Griff des Werkzeuggeräts besonders einfach einzustellen.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Die Aufgabe wird zunächst gelöst durch ein System zur Verbindung einer Staubsaugvorrichtung mit einem Werkzeuggerät, wobei das System folgende Komponenten umfasst:
- ein Werkzeuggerät mit einem Werkzeug,
- eine Staubsaugvorrichtung zum Absaugen von Staub, der bei einer Arbeit mit dem Werkzeuggerät entsteht,
- eine Sauganschlussvorrichtung.

Das System ist dadurch gekennzeichnet, dass die Sauganschlussvorrichtung zwischen dem Werkzeug des Werkzeuggeräts und dem Werkzeuggerät angeordnet vorliegt und mit dem Werkzeuggerät dadurch verbindbar ist, dass eine Verzahnung des Werkzeuggeräts mit einer Gegenverzahnung an der Sauganschlussvorrichtung in Eingriff bringbar ist. Die Erfindung ist mit dem Vorteil verbunden, dass ein Nutzer eine Stellung des Saugschlauchs gegenüber dem Werkzeuggerät und gegenüber dem Seitengriff nach Wunsch besonders einfache einstellen kann. Dadurch kann der Saugschlauch in gewünschter Weise geführt werden, wobei seine Stellung fest oder frei beweglich sein kann. Darüber hinaus ermöglicht die Erfindung, dass ein Drehen des Saugschlauchs um die Bohrachse wirksam verhindert werden kann. Es ist im Sinne der Erfindung ganz besonders bevorzugt, dass das System zur Verbindung einer Staubsaugvorrichtung mit einem Werkzeuggerät verwendet werden kann.

Bei dem Werkzeuggerät kann es sich insbesondere um ein Kernbohrgerät handeln, mit dem Bohrkerne aus einem zu bearbeitenden Untergrund, wie Gestein, Beton oder Mauerwerk, herausgeschnitten oder herausgetrennt werden können. Dementsprechend kann es sich bei dem Werkzeug des Werkzeuggeräts um eine Bohrkrone oder um einen Dosensenker handeln. Wenn das Werkzeuggerät von einem Kernbohrgerät gebildet wird, kann das vorgeschlagene System vorzugsweise als Kernbohr-System bezeichnet werden. Die Bohrkrone oder der Dosensenker können mit Diamantsplittern besetzt sein, um eine Schneidleistung des Werkzeugs zu verbessern. Vorzugsweise kann die Sauganschlussvorrichtung im Sinne der Erfindung auch als Saugkopf bezeichnet werden. Der Saugkopf liegt zwischen dem Werkzeug des Werkzeuggeräts und dem Werkzeuggerät angeordnet vor, wobei die Sauganschlussvorrichtung auf der dem Werkzeuggerät zugewandten Seite eine Gegenverzahnung oder eine Gegenkontur aufweisen kann, die mit der Verzahnung oder einer Kontur am Werkzeuggerät so zusammenwirken kann, dass eine Verbindung hergestellt wird zwischen Saugkopf und Werkzeuggerät. Vorzugsweise kann die Sauganschlussvorrichtung auch als Verbindungsstück zwischen dem Werkzeuggerät und dem Werkzeug betrachtet werden, das insbesondere dazu eingerichtet ist, einen möglichen Zwischenraum zwischen Kernbohrgerät auf der einen Seite und Bohrkrone und/oder Dosensenker auf der anderen Seite zu überbrücken. Insbesondere ist es im Sinne der Erfindung bevorzugt, dass der Zwischenraum zum Fixieren der Bohrkrone oder des Dosensenkers überbrückt wird. Ein solches Überbrücken ist bei keinem der beiden Absaugkonzepte für Kernbohrgeräte, die aus dem Stand der Technik bekannt sind, vorgesehen.

Der Bereich, in dem die Verbindung zwischen Saugkopf und Werkzeuggerät hergestellt wird, wird im Sinne der Erfindung bevorzugt auch als zweiter Verbindungsbereich bezeichnet. Auf Seiten des Werkzeuggeräts ist der Sauganschlussvorrichtung insbesondere ein Handgriff des Werkzeuggeräts zugewandt. Mit anderen Worten kann es im Sinne der Erfindung bevorzugt sein, dass die Sauganschlussvorrichtung zwischen dem Werkzeug des Werkzeuggeräts und einem Griff des Werkzeuggeräts angeordnet vorliegt. Der Griff umfasst vorzugsweise ein Griffstück, mit dem das Handstück des Griffes an einem Gehäuse der Werkzeugmaschine befestigt werden kann. Vorzugsweise kann der Griff auch als Seitenhandgriff des Werkzeuggeräts bezeichnet werden.

Die Verbindung zwischen Sauganschlussvorrichtung und Werkzeuggerät bzw. Griff des Werkzeuggeräts wird durch das Zusammenwirken einer Verzahnung und einer Gegenverzahnung hergestellt, wobei die Einheit aus Verzahnung und Gegenverzahnung im Sinne der Erfindung bevorzugt als Arretierung bezeichnet wird. Die Arretierung ist vorzugsweise dazu eingerichtet, das Werkzeuggerät bzw. den Griff des Werkzeuggeräts mit dem Saugkopf zu verbinden. Insbesondere kann mit der Arretierung ein Zwischenraum zwischen dem Werkzeuggerät und dem Werkzeug überbrückt werden. Insbesondere liegt die Arretierung in einem zweiten Verbindungsbereich zwischen Sauganschlussvorrichtung und Werkzeuggerät vor. Es ist im Sinne der Erfindung besonders bevorzugt, dass die Verzahnung in einem Griffstück des Werkzeuggeräts integriert vorliegt. Dadurch wird eine baulich besonders einfache Arretierung ermöglicht.

Die Sauganschlussvorrichtung weist ferner einen ersten Verbindungsbereich auf, wobei der Saugkopf in diesem ersten Verbindungsbereich mit dem Werkzeug des Werkzeuggerät verbunden werden kann. Der Saugkopf weist darüber hinaus einen zweiten Verbindungsbereich auf, wobei die Sauganschlussvorrichtung in diesem zweiten Verbindungsbereich mit dem Werkzeuggerät bzw. dem Griff des Werkzeuggeräts verbunden werden kann. Es ist im Sinne der Erfindung bevorzugt, dass der erste und der zweite Verbindungsbereich entlang einer im Wesentlichen zentralen Achse, die beispielsweise von der Antriebsachse des Werkzeugs des Werkzeuggeräts gebildet wird, angeordnet vorliegen. Diese Antriebsachse kann im Sinne der Erfindung auch als Welle oder Bohrachse bezeichnet werden.

Vorzugsweise weist der Saugkopf ferner einen dritten Verbindungsbereich auf, wobei die Sauganschlussvorrichtung in diesem dritten Verbindungsbereich mit der Staubsaugvorrichtung verbunden werden kann. Dieser dritte Verbindungsbereich kann vorzugsweise von einem Absaugstutzen gebildet werden oder einen solchen umfassen. Es ist im Sinne der Erfindung ganz besonders bevorzugt, dass die Sauganschlussvorrichtung einen Anschluss für eine Staubsaugvorrichtung umfasst. Es kann gedanklich eine zentrale Achse durch den dritten Verbindungsbereich bzw. durch den Absaugstutzen gelegt werden, wobei diese virtuelle zentrale Achse im Wesentlichen senkrecht steht auf der zentralen Achse, entlang derer der erste und der zweite Verbindungsbereich angeordnet sind. Der Begriff "im Wesentlichen" stellt für den Fachmann keinen unklaren Begriff dar, weil der Fachmann beispielsweise weiß, dass im Kontext der vorliegenden Erfindung auch kleine Abweichungen zur exakten mathematischen Orthogonalität, beispielsweise in einem Bereich von 0 bis 5 Grad, unter den Begriff "im Wesentlichen senkrecht" fallen sollen.

Es ist im Sinne der Erfindung bevorzugt, dass die Sauganschlussvorrichtung und die Staubsaugvorrichtung mit einem Saugschlauch miteinander verbunden sind. Ein erstes Ende des Saugschlauchs kann vorzugsweise mit der Sauganschlussvorrichtung bzw. dem dritten Verbindungsbereich der Sauganschlussvorrichtung verbunden werden und zur Staubsaugvorrichtung führen. Vorzugsweise kann ein zweites Ende des Saugschlauches mit der Staubsaugvorrichtung verbunden werden. Die vorliegende Erfindung ermöglicht es vorteilhafterweise, dass der Saugschlauch relativ zu dem Griff des Werkzeuggeräts fixiert werden kann. Darüber hinaus kann der Saugschlauch durch die Erfindung relativ zum Griff des Werkzeuggeräts besonders einfach und unkompliziert in einem Winkel verstellt werden können. Mit anderen Worten besteht ein wesentlicher Vorteil, der mit der vorliegenden Erfindung erreicht wird, darin, dass ein Winkel zwischen Saugschlauch und Griff des Werkzeuggeräts besonders einfach eingestellt werden kann. Dies wird insbesondere durch die Vorsehung der Arretierung zwischen Sauganschlussvorrichtung und Werkzeuggerät erreicht, wobei dadurch vorteilhafterweise eine lösbare und/oder im Winkel einstellbare Verbindung zwischen dem Werkzeuggerät bzw. seinem Griff und dem Saugkopf hergestellt werden kann. Es ist vorgesehen, dass die Arretierung eine Verzahnung oder eine Kontur aufweist, die mit einer Gegenverzahnung oder Gegenkontur am Werkzeuggerät in Eingriff gelangen kann. Es ist im Sinne der Erfindung bevorzugt, dass die Verzahnung dazu eingerichtet ist, in die Gegenverzahnung der Sauganschlussvorrichtung einzugreifen. Dadurch kann eine vorzugsweise verstellbare, d.h. variable Verbindung zwischen dem Griff des Werkzeuggerät und der Sauganschlussvorrichtung hergestellt werden.

Durch die Vorsehung der Arretierung zwischen Sauganschlussvorrichtung und Werkzeuggerät kann insbesondere erreicht werden, dass der Saugschlauch, der die Staubsaugvorrichtung und das Werkzeuggerät miteinander verbindet, relativ zu dem Seitenhandgriff des Werkzeuggeräts fixiert werden kann. Darüber hinaus wird mit der Erfindung vorteilhafterweise eine Möglichkeit bereitgestellt, einen Winkel zwischen Saugschlauch und Griff des Werkzeuggeräts besonders einfach einzustellen. Insbesondere können durch die Vorsehung der Arretierung mindestens drei Befestigungsstufen bereitgestellt werden, die unterschiedliche Befestigungsmodi zwischen Sauganschlussvorrichtung und Werkzeuggerät festlegen. Es ist im Sinne der Erfindung bevorzugt, dass die drei Befestigungsstufen durch die Anzahl Drehungen des Seitengriffs beim Aufdrehen eingestellt werden können. Vorzugsweise kann in einer ersten Befestigungsstufe der Griff des Werkzeuggeräts und die Sauganschlussvorrichtung im Wesentlichen fixiert miteinander vorliegen. In einer zweiten Befestigungsstufe können der Griff des Werkzeuggeräts und die Sauganschlussvorrichtung eine Einheit bilden, die relativ zum Werkzeuggerät drehbar ausgebildet ist. Es ist im Sinne der Erfindung bevorzugt, dass in einer dritten Befestigungsstufe die Sauganschlussvorrichtung relativ zum Griff des Werkzeuggeräts drehbar ausgebildet ist. Mit anderen Worten liegen in einer ersten Befestigungsstufe der Griff des Werkzeuggeräts und die Sauganschlussvorrichtung miteinander befestigt vor. In einer zweiten Befestigungsstufe lassen sich der Seitenhandgriff des Werkzeuggeräts und der Saugkopf relativ zum Werkzeuggerät gemeinsam drehen. In einer dritten Befestigungsstufe kann der Saugkopf relativ zum Seitenhandgriff des Werkzeuggeräts verdreht werden. Dies kann vorzugsweise durch eine zusätzliche Betätigung an der Verzahnung am Griffstück des Werkzeuggeräts erreicht werden. Insbesondere kann durch die zusätzliche Betätigung an der Verzahnung erreicht werden, dass sich die Verzahnung zurückziehen lässt. Dadurch wird insbesondere eine feste Stellung erreicht werden, die insbesondere rastend und offen möglich ist.

Es ist im Sinne der Erfindung bevorzugt, dass die Befestigungsstufen durch eine Anzahl von Drehungen des Griffes des Werkzeuggeräts einstellbar sind. Mit anderen Worten können die Befestigungsstufen in Abhängigkeit der Anordnung von Verzahnung und Gegenverzahnung zueinander eingestellt werden. Durch eine Positionierung der Verzahnung und Gegenverzahnung zueinander kann somit vorzugsweise festgelegt werden, ob der Griff des Werkzeuggeräts und die Sauganschlussvorrichtung im Wesentlichen fixiert miteinander vorliegen oder der Griff des Werkzeuggeräts und die Sauganschlussvorrichtung eine Einheit bilden, die relativ zum Werkzeuggerät drehbar ausgebildet ist oder ob die Sauganschlussvorrichtung relativ zum Griff des Werkzeuggeräts drehbar ausgebildet sein soll.

Es ist im Sinne der Erfindung bevorzugt, dass die Verzahnung in dem Griff des Werkzeuggeräts integriert vorliegt. Durch diese Ausgestaltung der Erfindung kann ein besonders kompaktes und dadurch leicht zu handhabendes Werkzeuggerät bereitgestellt werden.

In einem weiteren Aspekt betrifft die Erfindung ein Verfahren zur Verbindung einer Staubsaugvorrichtung mit einem Werkzeuggerät, das die folgenden Schritte umfasst:
a) Bereitstellung eines Werkzeuggeräts mit einem Werkzeug,
b) Bereitstellung einer Sauganschlussvorrichtung, die zwischen dem Werkzeug des Werkzeuggeräts und dem Werkzeuggerät angeordnet vorliegt,
c) Herstellung einer Verbindung zwischen der Sauganschlussvorrichtung und dem Werkzeuggerät, dadurch dass eine Verzahnung des Werkzeuggeräts mit einer Gegenverzahnung an der Sauganschlussvorrichtung in Eingriff gebracht wird.

Die für das Werkzeuggerät-System eingeführten Begriffe, Definitionen und technischen Vorteile gelten für das vorgeschlagene Verfahren analog. Vorteilhafterweise wird es durch das vorgeschlagene Verfahren ermöglicht, einen Winkel zwischen Saugschlauch und Griff des Werkzeuggeräts besonders einfach und unkompliziert zu verstellen. Vorzugsweise kann das vorgeschlagene Verfahren mit dem vorgeschlagenen System durchgeführt werden. Insbesondere weist das Werkzeuggerät ein Werkzeug auf. Ferner weist das Werkzeuggerät eine Verzahnung auf, die mit einer Gegenverzahnung an der Sauganschlussvorrichtung in Eingriff gebracht werden kann. Vorzugsweise liegt die Sauganschlussvorrichtung zwischen dem Werkzeug des Werkzeuggeräts und dem Werkzeuggerät angeordnet vor, so dass sie vorzugsweise ein Verbindungsstück zwischen Werkzeug und Werkzeuggerät darstellt, mit dem ein Zwischenraum zwischen Werkzeug und Werkzeuggerät überbrückt werden kann.

Im Kontext der Erfindung wird ein Griffstück für ein Kernbohrgerät offenbart, das insbesondere zum Trockenbohren verwendet werden kann. Dabei kann das Kernbohrgerät in einer besonders bevorzugten Ausgestaltung der Erfindung zum Dosensenken verwendet werden. Wenn das Werkzeug des Werkzeuggeräts mit Diamanten besetzt ist, kann das Gerät vorzugsweise auch als Diamant-Kernbohrgerät bezeichnet werden. Es ist im Sinne der Erfindung bevorzugt, dass das Griffstück des Werkzeuggeräts unter Verwendung einer Arretierung und einer Gegenkontur, die vorzugsweise im Saugkopf vorliegt, den Werkzeuggriff fixiert und einen einstellbaren Winkel zwischen Sauganschluß und Griff ermöglicht.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1 bis 3: Ansichten bevorzugter Ausgestaltungen des Griffs eines Werkzeuggeräts
- Fig. 4 bis 6: Ansichten bevorzugter Ausgestaltungen der Sauganschlussvorrichtung
- Fig. 7: Ansicht einer bevorzugten Ausgestaltung von Sauganschlussvorrichtung, Arretierung und Griff des Werkzeuggeräts

### Ausführungsbeispiele und Figurenbeschreibung:

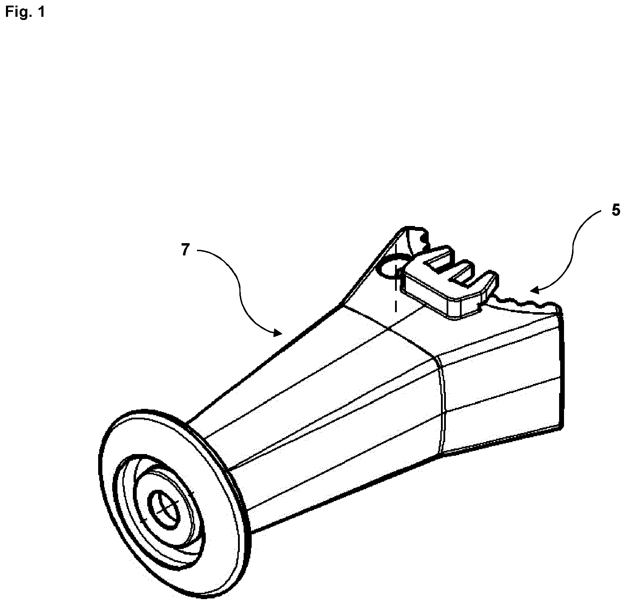

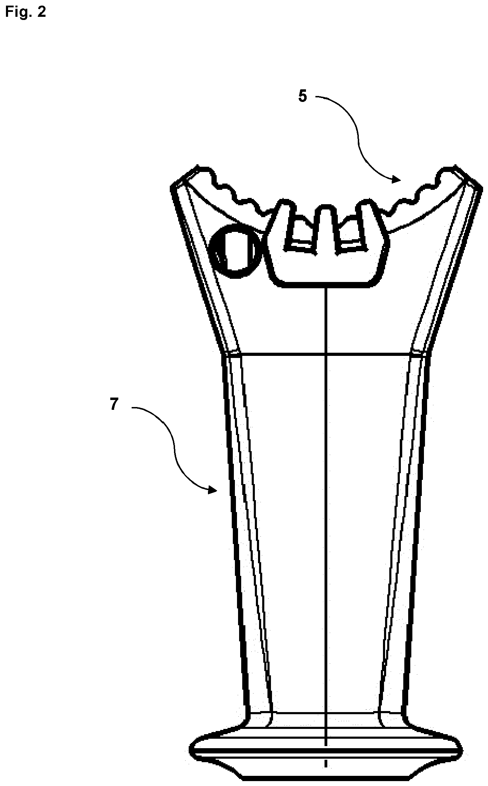

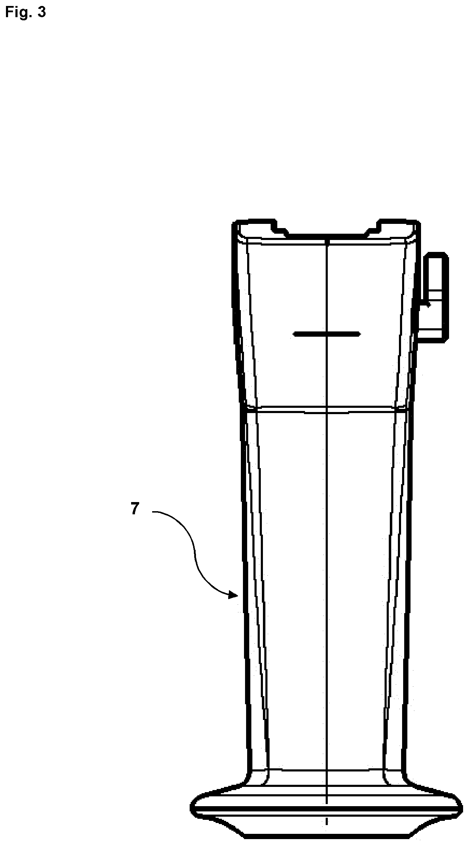

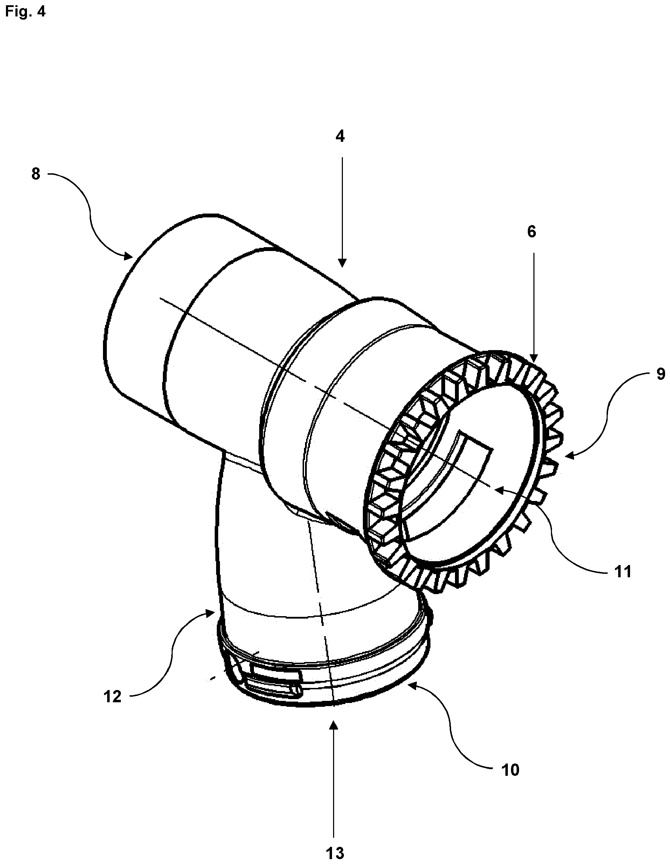

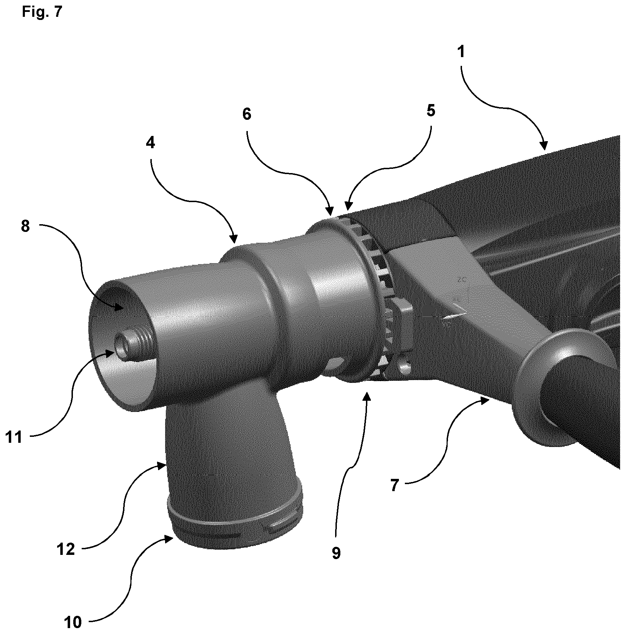

Die Figuren 1 bis 3 zeigen Ansichten von bevorzugten Ausgestaltungen des Griffs (7) eines Werkzeuggeräts (1, dargestellt in Fig. 7), das Bestandteil eines vorgeschlagenen Werkzeuggerät-Systems sein kann. Insbesondere zeigen die Figuren 1 bis 3 Griffstücke, die ein Bestandteil des Werkzeuggeräts (1) sein können. Der Nutzer des Werkzeuggeräts (1) kann das Werkzeuggerät (1) an dem Griff (7) greifen und es so halten oder führen. Vorzugsweise kann in dem Griff (7) des Werkzeuggeräts (1) eine Verzahnung (5) integriert vorliegen, die mit einer Gegenverzahnung (6) an der Sauganschlussvorrichtung (4) so zusammenwirken kann (siehe ab Figur 4), dass eine verstellbare Verbindung zwischen Werkzeuggerät (1) und Sauganschlussvorrichtung (4) gebildet wird. Die Verzahnung (5) des Griffs (7) des Werkzeuggeräts (1) umfasst eine Reihe von Zähnen, d.h. hervorstehende Elementen oder Bereichen, die mit zurückgezogenen Bereichen oder Vertiefungen der Gegenverzahnung (6) der Sauganschlussvorrichtung (4) in Eingriff gelangen können, wodurch die Verbindung gebildet werden kann.

Die Figuren 4 bis 6 zeigen bevorzugte Ausgestaltungen der Sauganschlussvorrichtung (4). Insbesondere zeigt Fig. 4 eine Schrägansicht einer bevorzugten Ausführungsform einer Sauganschlussvorrichtung (4). Die Sauganschlussvorrichtung (4) kann vorzugsweise zur Verbindung des Werkzeuggeräts (1) mit seinem Werkzeug (3) auf der einen Seite und zur Verbindung des Werkzeuggeräts (1) mit einer Staubsaugvorrichtung (2, nicht dargestellt) auf der anderen Seite verwendet werden. Die Sauganschlussvorrichtung (4) weist daher vorzugsweise drei Eingänge bzw. Ausgänge auf, die im Sinne der Erfindung auch als Verbindungsbereiche (8-10) bezeichnet werden. Es ist im Sinne der Erfindung bevorzugt, dass die Sauganschlussvorrichtung (4) einen ersten Verbindungsbereich (8) zur Verbindung der Sauganschlussvorrichtung (4) mit dem Werkzeug (3) des Werkzeuggeräts (1) aufweist. Dieser erste Verbindungsbereich (8) ist in Fig. 4 oben rechts dargestellt. Es ist im Sinne der Erfindung bevorzugt, dass der erste Verbindungsbereich (8) und ein zweiter Verbindungsbereich (9) entlang einer zentralen Achse (11) innerhalb der Sauganschlussvorrichtung (4) angeordnet vorliegen, wobei diese zentrale Achse (11) vorzugsweise mit der Antriebs- oder Bohrachse des Werkzeuggeräts (1) zusammenfallen kann. Vorzugsweise weist die Sauganschlussvorrichtung (4) einen zweiten Verbindungsbereich (9) zur Verbindung der Sauganschlussvorrichtung (4) mit dem Werkzeuggerät (1) auf, wobei das Werkzeuggerät (1) bevorzugt auch als Kernbohrgerät ausgebildet sein kann. Darüber hinaus kann die Sauganschlussvorrichtung (4) einen dritten Verbindungsbereich (10) zur Verbindung der Sauganschlussvorrichtung (4) mit einer Staubsaugvorrichtung (2) aufweisen, wobei die Staubabsaugvorrichtung (2) vorzugsweise dazu eingerichtet ist, den Staub, der beim Betrieb des Werkzeuggeräts (1) anfällt, so abzusaugen, dass verhindert wird, dass der Staub in die Atemwege eines Nutzers gelangt.

Der dritte Verbindungsbereich (10) kann vorzugsweise von einem Absaugstutzen (12) gebildet werden oder einen Absaugstutzen (12) umfassen. Es ist im Sinne der Erfindung bevorzugt, dass durch die Sauganschlussvorrichtung (4), insbesondere durch den dritten Verbindungsbereich (10) bzw. den Absaugstutzen (12) der Sauganschlussvorrichtung (4), gedanklich eine virtuelle zentrale Achse (13) gelegt werden kann, wobei diese virtuelle zentrale Achse (13) im Wesentlichen senkrecht steht auf der zentralen Achse (11), entlang derer der erste Verbindungsbereich (8) und der zweite Verbindungsbereich (9) angeordnet sind. Mit anderen Worten können die zentrale Achse (11) und die virtuelle zentrale Achse (13) orthogonal zueinander ausgebildet sein. Die zentrale Achse (11) und die virtuelle zentrale Achse (13) werden in den Fig. 4 bis 6 durch die gestrichelten Linien angedeutet. Die Verbindung zwischen Sauganschlussvorrichtung (4) und Staubsaugvorrichtung (2) kann insbesondere unter Verwendung eines Saugschlauchs (nicht dargestellt) gebildet werden, der beispielsweise durch einen Rastmechanismus mit der Sauganschlussvorrichtung (4) verbunden werden kann. Vorzugsweise mündet der Saugschlauch in den dritten Verbindungsbereich (10) der Sauganschlussvorrichtung (4) ein.

Vorzugsweise ist die Sauganschlussvorrichtung (4) dazu eingerichtet, einen Zwischenraum zwischen dem Werkzeug (3) des Werkzeuggeräts (1) und dem Werkzeug (1) selbst zu überbrücken bzw. auszufüllen. Vorzugsweise bildet die Sauganschlussvorrichtung (4) ein Verbindungsstück, das auf die in den Fig. 4 bis 6 dargestellte Weise zwischen Werkzeug (3) und Werkzeuggerät (1) angeordnet sein kann. Dadurch kann mit dem vorgeschlagenen Werkzeuggerät-System vorteilhafterweise eine verstellbare Verbindung zwischen Werkzeug (3) und Werkzeuggerät (1) bereitgestellt werden.

Die Sauganschlussvorrichtung (4) umfasst eine Gegenverzahnung (6), die im Sinne der Erfindung bevorzugt auch als Gegenkontur bezeichnet werden kann. Vorzugsweise bilden die Gegenverzahnung (6) der Sauganschlussvorrichtung (4) und die Verzahnung (5) des Werkzeuggeräts (1) eine Arretierung, die die Verbindung zwischen Werkzeuggerät (1) und Sauganschlussvorrichtung (4) bildet. Es ist im Sinne der Erfindung ganz besonders bevorzugt, dass die Verbindung zwischen Werkzeuggerät (1) und Sauganschlussvorrichtung (4) zwischen der Sauganschlussvorrichtung (4) und einem Griff (7) des Werkzeuggeräts (1) gebildet wird.

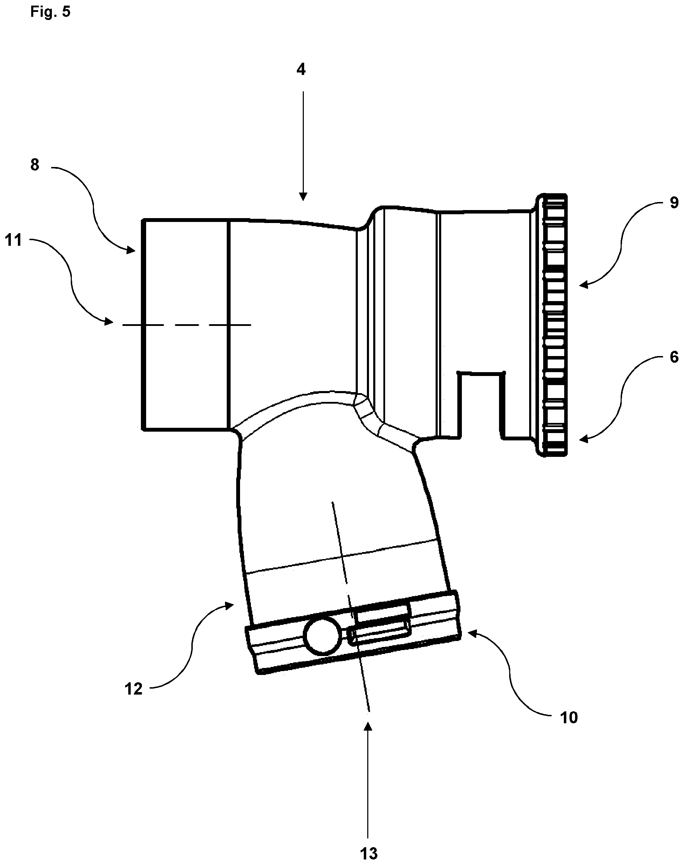

Fig. 5 zeigt eine Seitenansicht einer bevorzugten Ausführungsform der Sauganschlussvorrichtung (4).

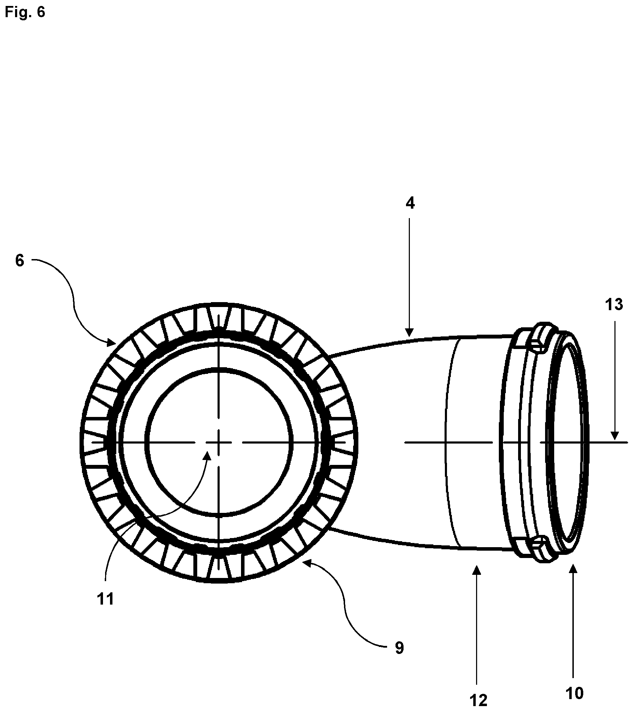

Fig. 6 zeigt eine weitere Ansicht einer bevorzugten Ausführungsform der Sauganschlussvorrichtung (4). Die in Fig. 6 dargestellte Ansicht zeigt insbesondere den zweiten Verbindungsbereich (9) der Sauganschlussvorrichtung (4), der dazu eingerichtet ist, die Verbindung zwischen Sauganschlussvorrichtung (4) und Werkzeuggerät (1) bzw. einem Griff (7) des Werkzeuggeräts (1) herzustellen. Der erste Verbindungsbereich (8) der Sauganschlussvorrichtung (4), der vorzugsweise dazu eingerichtet ist, eine Verbindung zwischen Sauganschlussvorrichtung (4) und Werkzeug (3) herzustellen, ist in Fig. 6 nicht dargestellt. In der rechten Bildhälfte von Fig. 6 ist der dritte Verbindungsbereich (10) dargestellt, der vorzugsweise als Absaugstutzen (12) ausgebildet ist. Der dritte Verbindungsbereich (10) bildet vorzugsweise den Übergang von der Sauganschlussvorrichtung (4) zu einer Staubsaugvorrichtung (2, nicht dargestellt), wobei die Verbindung insbesondere von einem Saugschlauch hergestellt werden kann.

Fig. 7 zeigte eine bevorzugte Ausführungsform des vorgeschlagenen Werkzeuggerät-Systems, allerdings ohne Werkzeug (3). Insbesondere zeigt Fig. 7 die Sauganschlussvorrichtung (4), die mit einem Werkzeuggerät (1) verbunden vorliegt. Die Sauganschlussvorrichtung (4) weist eine Gegenverzahnung (6) auf, die mit einer Verzahnung (5) des Griffes (7) des Werkzeuggeräts (1) in Eingriff vorliegen kann, wodurch vorteilhafterweise eine Arretierung hergestellt wird. Die Arretierung liegt vorzugsweise im zweiten Verbindungsbereich (9) des vorgeschlagenen Werkzeuggerät-Systems vor. Im ersten Verbindungsbereich (8) der Sauganschlussvorrichtung (4) ist in Fig. 7 die zentrale Achse (11) zu sehen, an der entlang der erste Verbindungsbereich (8) und der zweite Verbindungsbereich (9) angeordnet vorliegen können. Eine virtuelle zentrale Achse (13), die insbesondere senkrecht auf der zentralen Antriebsachse (11) stehen kann, verläuft vorzugsweise durch den dritten Verbindungsbereich (10) bzw. den Ansaugstutzen (12) der Sauganschlussvorrichtung (4). Ausgehend von dem dritten Verbindungsbereich (10) kann die Sauganschlussvorrichtung (4) mit einer Staubsaugvorrichtung (2, nicht dargestellt) verbunden werden. Dazu kann insbesondere ein Saugschlauch verwendet werden.

### Bezugszeichenliste

- 1: Werkzeuggerät
- 2: Staubsaugvorrichtung
- 3: Werkzeug
- 4: Sauganschlussvorrichtung
- 5: Verzahnung
- 6: Gegenverzahnung
- 7: Griff
- 8: erster Verbindungsbereich
- 9: zweiter Verbindungsbereich
- 10: dritter Verbindungsbereich
- 11: zentrale Achse (Antriebsachse)
- 12: Absaugstutzen
- 13: virtuelle zentrale Achse

## Patentansprüche

1. Werkzeuggerät-System, das folgende Komponenten umfasst:
- ein Werkzeuggerät (1) mit einem Werkzeug (3),
- eine Staubsaugvorrichtung (2) zum Absaugen von Staub, der bei einer Arbeit mit dem Werkzeuggerät (1) entsteht,
- eine Sauganschlussvorrichtung (4),
**dadurch gekennzeichnet, dass**
die Sauganschlussvorrichtung (4) zwischen dem Werkzeug (3) des Werkzeuggeräts (1) und dem Werkzeuggerät (1) angeordnet vorliegt und mit dem Werkzeuggerät (1) dadurch verbindbar ist, dass eine Verzahnung (5) des Werkzeuggeräts (1) mit einer Gegenverzahnung (6) an der Sauganschlussvorrichtung (4) in Eingriff bringbar ist.

2. Werkzeuggerät-System nach Anspruch 1
**dadurch gekennzeichnet, dass**
die Verzahnung (5) des Werkzeuggeräts (1) mit der Gegenverzahnung (6) an der Sauganschlussvorrichtung (4) dergestalt zusammenwirkt, das mindestens drei Befestigungsstufen einstellbar sind.

3. Werkzeuggerät-System nach Anspruch 2
**dadurch gekennzeichnet, dass**
in einer ersten Befestigungsstufe ein Griff (7) des Werkzeuggeräts (1) und die Sauganschlussvorrichtung (4) im Wesentlichen fixiert miteinander vorliegen;
in einer zweiten Befestigungsstufe der Griff (7) des Werkzeuggeräts (1) und die Sauganschlussvorrichtung (4) eine Einheit bilden, die relativ zum Werkzeuggerät (1) drehbar ausgebildet ist;
in einer dritten Befestigungsstufe die Sauganschlussvorrichtung (4) relativ zum Griff (7) des Werkzeuggeräts (1) drehbar ausgebildet ist.

4. Werkzeuggerät-System nach Anspruch 2 oder 3
**dadurch gekennzeichnet, dass**
die Befestigungsstufen durch eine Anzahl von Drehungen des Griffes (7) des Werkzeuggeräts (1) einstellbar sind.

5. Werkzeuggerät-System nach einem der vorhergehenden Ansprüche
**dadurch gekennzeichnet, dass**
die Sauganschlussvorrichtung (4) einen ersten Verbindungsbereich (8) zur Verbindung der Sauganschlussvorrichtung (4) mit dem Werkzeug (3) des Werkzeuggerät (1) aufweist.

6. Werkzeuggerät-System nach einem der vorhergehenden Ansprüche
**dadurch gekennzeichnet, dass**
die Sauganschlussvorrichtung (4) einen zweiten Verbindungsbereich (9) zur Verbindung der Sauganschlussvorrichtung (4) mit dem Werkzeuggerät (1) aufweist.

7. Werkzeuggerät-System nach Anspruch 6
**dadurch gekennzeichnet, dass**
der erste und der zweite Verbindungsbereich (8, 9) entlang einer im Wesentlichen zentralen Achse (11) des Werkzeuggeräts (1) angeordnet vorliegen.

8. Werkzeuggerät-System nach einem der vorhergehenden Ansprüche
**dadurch gekennzeichnet, dass**
die Sauganschlussvorrichtung (4) einen dritten Verbindungsbereich (10) zur Verbindung der Sauganschlussvorrichtung (4) mit der Staubsaugvorrichtung (2) aufweist.

9. Werkzeuggerät-System nach Anspruch 8
**dadurch gekennzeichnet, dass**
der dritte Verbindungsbereich (10) von einem Absaugstutzen (12) gebildet wird oder einen Absaugstutzen (12) umfasst.

10. Werkzeuggerät-System nach Anspruch 8 oder 9
**dadurch gekennzeichnet, dass**
eine virtuelle zentrale Achse (13) des dritten Verbindungsbereichs (10) im Wesentlichen senkrecht steht auf der zentralen Achse (11), entlang derer der erste und der zweite Verbindungsbereich (8, 9) angeordnet sind.

11. Werkzeuggerät-System nach einem der vorhergehenden Ansprüche
**dadurch gekennzeichnet, dass**
die Sauganschlussvorrichtung (4) einen Anschluss für eine Staubsaugvorrichtung (2) umfasst.

12. Werkzeuggerät-System nach einem der vorhergehenden Ansprüche
**dadurch gekennzeichnet, dass**
die Verzahnung (5) in dem Griff (7) des Werkzeuggeräts (1) integriert vorliegt.

13. Werkzeuggerät-System nach einem der vorhergehenden Ansprüche
**dadurch gekennzeichnet, dass**
die Verzahnung (5) dazu eingerichtet ist, in die Gegenverzahnung (6) der Sauganschlussvorrichtung (4) einzugreifen.

14. Verfahren zur Verbindung eines Staubsaugvorrichtung (2) mit einem Werkzeuggerät (1), **umfassend die folgenden Schritte:**
a) Bereitstellung eines Werkzeuggeräts (1) mit einem Werkzeug (3),
b) Bereitstellung einer Sauganschlussvorrichtung (4), die zwischen dem Werkzeug (3) des Werkzeuggeräts (1) und dem Werkzeuggerät (1) angeordnet vorliegt,
c) Herstellung einer Verbindung zwischen der Sauganschlussvorrichtung (4) und dem Werkzeuggerät (1), dadurch dass eine Verzahnung (5) des Werkzeuggeräts (1) mit einer Gegenverzahnung (6) an der Sauganschlussvorrichtung (4) in Eingriff gebracht wird.
